# FASCICULE DE BREVET EUROPEEN

(11) **EP 0 660 568 B1**
(45) Date de publication et mention de la délivrance du brevet: **23.08.2000**
(21) Numéro de dépôt: 94402903.2
(22) Date de dépôt: 16.12.1994
(51) Int. Cl.: H04L 12/40, G06F 13/376

(54) **Dispositif d'intercommunication entre unités émettrices réceptrices numériques**
Gerät zur Interkommunikation zwischen digitalen Sender-Empfängern
Device for intercommunication among digital transceivers

(30) Priorité: 20.12.1993 FR 9315300
(43) Date de publication de la demande: 28.06.1995
(73) Titulaire: ALCATEL, 75008 Paris (FR)
(72) Inventeur: Canonne, Michel, 95580 Andilly (FR); Breuly Alain, F-95100 Argenteuil (FR); Tran, Du-Ban, F-75019 Paris (FR)
(74) Mandataire: Schaub, Bernard

(56) Documents cités:
- WO-A-83/03178
- PATENT ABSTRACTS OF JAPAN vol. 13, no. 574 (E-863) 19 Décembre 1989 & JP-A-01 240 042 (NEC ENG. LTD.) 25 Septembre 1989

## Description

L'invention concerne un dispositif d'intercommunication pour unités émettrices réceptrices de données numériques se partageant des moyens supports de transmission filaires auxquelles elles accèdent par une méthode de type dit CSMA/CD, en particulier dans le cadre d'installations de télécommunications numériques.

La mise en oeuvre d'une méthode d'accès de type CSMA/CD entre unités émettrices réceptrices de données numériques, couramment dénommées stations, d'un réseau local est connue, elle est notamment évoquée dans un article d'Alain DERYCKE intitulé "Réseaux locaux" qui est paru en 1987 avec la référence H3550 et en pages 1-17, dans le traité intitulé "Informatique" de la collection "Techniques de l'ingénieur" publiée à Paris, FR.

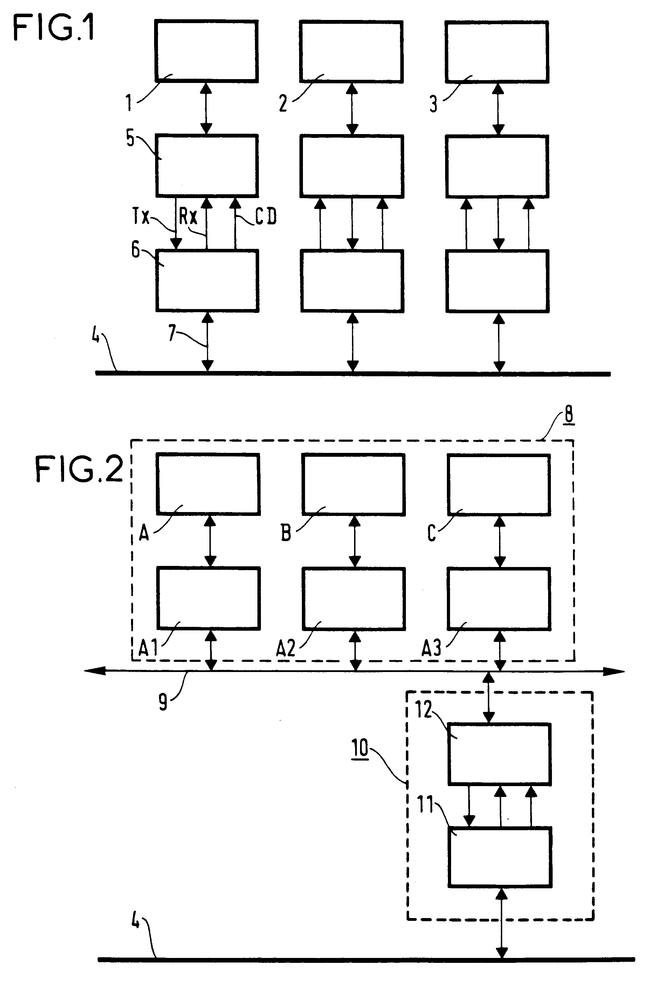

Un exemple classique de dispositif d'intercommunication tel qu'évoqué ci-dessus est schématisé sur la figure 1 jointe.

Il est supposé prévu pour desservir des unités émettrices réceptrices référencées 1, 2 et 3 qui sont par exemple du type carte porteuse de circuits électroniques; ces cartes correspondent par exemple à des unités de commande et/ou de traitement régies par processeur, qu'il s'agit d'interconnecter afin qu'elles puissent dialoguer entre elles. Un tel dialogue est prévu organisé selon un protocole donné, par exemple le protocole communément désigné sous la référence "Ethernet 802.3".

Deux cartes, par exemple les cartes 1 et 2 sont supposées faire partie d'un même ensemble fonctionnel, par exemple un commutateur téléphonique privé, où elles sont connectées à des moyens supports de transmission communs, de type fond de panier, dans un même alvéole du contenant, classiquement une armoire ou un coffret, où est logé l'ensemble.

Une autre carte, telle la carte 3, est ici supposée faisant partie d'un autre ensemble fonctionnel, éventuellement un autre commutateur téléphonique, qui peut être prévu dans un autre alvéole du contenant envisagé ci-dessus, ou encore dans un contenant distant, par exemple situé à une centaine de mètres.

Toutes les cartes envisagées, telles 1, 2, 3, sont supposées interconnectées entre elles au moyen d'un lien support de transmission commun 4, par exemple un câble coaxial, dont l'exploitation est régie selon un standard conforme au protocole utilisé, typiquement le standard dénommé "10 base 2" dans l'exemple présent de l'utilisation de la norme ISO/IEC 8802.3.

Chaque carte est branchée sur ce lien 4 par l'intermédiaire d'un module contrôleur 5 pour la gestion des communications et d'un module émetteur-récepteur 6, couramment désigné par le terme "transceiver", ces modules étant disponibles dans le commerce.

Chaque module émetteur-récepteur 6 est relié au lien 4 par une liaison bidirectionnelle 7 sur laquelle toutes les données numérisées circulent en série et dans les deux sens.

Il est relié au module contrôleur associé 5 par trois liaisons unidirectionnelles :
- une liaison Rx qui est affectée à la réception des données provenant du lien 4;
- une liaison Tx qui est affectée à la transmission des données vers le lien 4;
- une liaison CD qui est affectée à la signalisation des collisions se produisant lors des tentatives d'émission simultanées par des unités émettrices réceptrices différentes sur le lien 4.

En effet, lorsque la méthode d'accès au lien 4 est prévue de type CSMA/CD, chaque unité émettrice-réceptrice doit commencer par vérifier qu'il n'y a pas de transmission de données en cours sur le lien à partir d'une autre unité, avant d'émettre elle-même sur ce lien. Comme cette méthode ne permet pas d'éviter les tentatives d'émission simultanées par des unités émettrices-réceptrices, en l'absence de transmission établie, lorsque le lien est disponible, un signal dit de collision est produit, dans le cas présent sur la liaison CD, par toute unité émettrice-réceptrice détectant des tentatives d'émission simultanées par des unités émettrices-réceptrices, ces tentatives se traduisant par la présence simultanée de données émises selon des trames temporelles différentes sur le lien.

Un inconvénient de ce genre de dispositif classique d'intercommunication entre unités émettrices-réceptrices de données numériques est le relativement grand nombre de modules qui sont nécessaires à sa mise en oeuvre, ce qui pénalise à la fois l'encombrement et le prix de revient de l'installation. En outre, le standard "10 base 2" impose, sur un lien 4 de type câble coaxial, une distance minimale de O,5 mètre entre les points de connexion successifs au câble des liaisons 7 relatives à chacune des unités émettrices-réceptrices, ceci est difficilement réalisable dans une même armoire, et peut être très pénalisant du point de vue encombrement.

WO-A-8303178 décrit un dispositif regroupant des stations utilisateurs par groupes à l'aide de modules d'interface, chaque groupe étant relié à un bus de transmission à accès CSMA/CD par un module émetteur/récepteur. Une détection de collision locale est effectué entre les stations d'un même groupe.

L'invention vise à remédier aux inconvénients mentionnés plus haut. Elle se rapporte à cet effet à un dispositif d'intercommunication pour unités émettrices-réceptrices de données numériques se partageant au moins un lien support de transmission commun (4) auquel elles accèdent par une méthode de type dit "CSMA/CD".

Selon une caractéristique de l'invention, ce dispositif d'intercommunication comporte au moins un bus commun à une pluralité d'unités formant un groupement accédant au lien support de transmission commun par l'intermédiaire d'un agencement d'accès commun, ledit bus commun comportant deux fils formant une boucle de transmission de données numériques en mode différentiel auxquels les unités du groupement sont reliées en parallèle, via chacune un composant émetteur-récepteur individuel, bi-directionnel et commutable, pour leurs intercommunications, un fil de signalisation de collision, auquel les unités du groupement et l'agencement d'accès commun affecté à ce groupement sont reliés en commun , pour n'autoriser qu'une seule émission à la fois au niveau du groupement, soit par une unité du groupement, soit par l'agencement, et pour bloquer toute tentative d'émissions simultanées, ainsi qu'un fil dit d'autorisation de réception externe qui est marqué par l'agencement d'accès commun affecté au groupement, lorsque cet agencement est émetteur autorisé à destination de ce groupement, et qui est relié à une entrée de commande du composant émetteur-récepteur individuel de chaque unité du groupement pour autoriser la transmission à ces unités des données émises en ce cas par l'agencement d'accès.

L'invention, ses avantages et ses caractéristiques ressortiront de la description suivante d'un exemple non limitatif de réalisation se référant aux figures mentionnées ci-dessous.

La Figure 2 est un schéma synoptique correspondant à celui de la figure 1 précédemment décrite en illustration de l'art antérieur, elle présente un exemple de dispositif d'intercommunication entre unités émettrices-réceptrices accédant à des moyens supports de transmission communément partagés en appliquant une méthode d'accès de type CSMA/CD.

La figure 3 est un schéma synoptique plus détaillé d'une partie de ce même dispositif.

Le schéma présenté en figure 2 est relatif à un dispositif d'intercommunication entre des unités émettrices-réceptrices de données numériques, ici symbolisées par trois unités référencées A, B et C.

Les unités émettrices-réceptrices sont par exemple des cartes porteuses de circuits électroniques, notamment de gestion ou de traitement de données, appartenant à un même ensemble fonctionnel, elles communiquent par des moyens supports de transmission filaires communément partagés, d'une part, entre elles et éventuellement avec d'autres unités émettrices-réceptrices, par exemple des stations de travail. En effet il est envisageable de partager des mêmes moyens supports de transmission entre des unités n'appartenant pas toutes à un même ensemble fonctionnel ou encore entre des unités appartenant à des sous-ensembles qui, physiquement séparés, partagent cependant les mêmes moyens supports de transmission.

Comme déjà indiqué, les unités considérées sont destinées à communiquer par l'intermédiaire d'un dispositif d'intercommunication réalisé en accord avec la norme 802.3 par des moyens supports de transmission communs où les communications s'établissent par application d'une méthode d'accès de type CSMA/CD.

Chaque unité comporte notamment un contrôleur, non représenté, qui est par exemple du type mis en oeuvre dans les réseaux locaux ETHERNET où les moyens supports de transmission sont du type câble coaxial.

Dans l'exemple proposé, les unités A, B et C sont supposées faire partie d'un même groupement d'un ensemble fonctionnel 8 susceptible d'en comporter éventuellement plusieurs, par exemple un commutateur téléphonique privé.

Selon l'invention, les unités émettrices-réceptrices, telles A, B, C, appartenant à un même groupement de l'ensemble fonctionnel référencé 8 communiquent entre elles par l'intermédiaire d'un bus 9 à quatre fils auquel elles sont respectivement connectées, celui-ci étant par exemple un bus de fond de panier d'une alvéole.

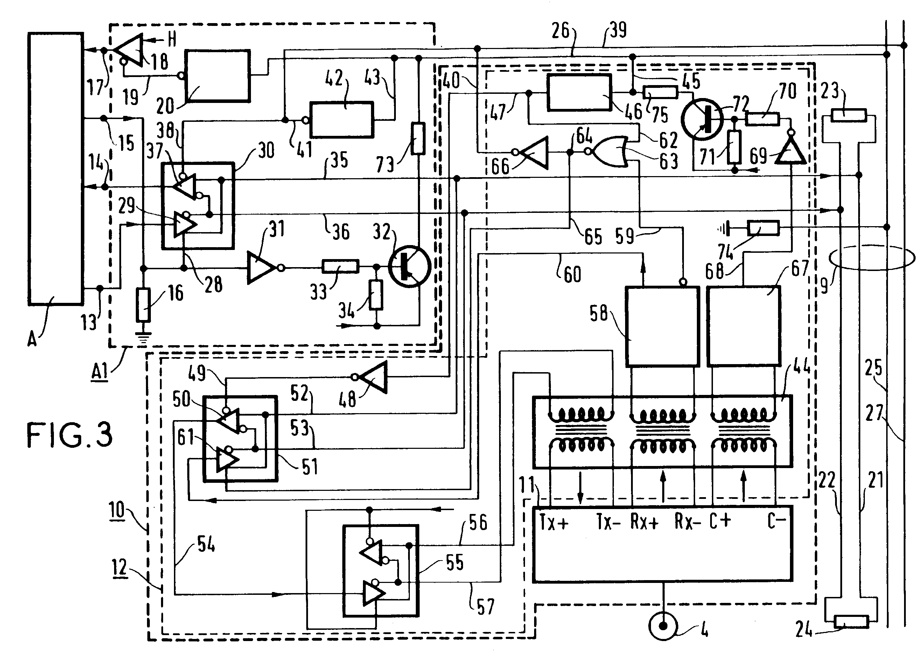

Ces unités sont raccordées aux quatre fils de ce bus 9 par des équipements d'accès individuels, tels A1, A2, A3, qui seront détaillés ci-après en liaison avec la figure 3.

Chaque groupement d'unités desservies par un même bus 9 est ici prévu relié par l'intermédiaire d'un agencement d'accès commun 10 à un lien support de transmission commun 4, classiquement un câble coaxial, qui est régi selon le protocole "10 Base 2", déjà évoqué plus haut.

Chaque agencement d'accès commun 10, réalisé par exemple sur carte, comporte un module émetteur-récepteur 11 par lequel il est raccordé au lien 4, ainsi qu'un équipement 12, dit auxiliaire d'échange inséré entre module 11 et bus 9. Les modules émetteurs-récepteurs 11 sont éventuellement identiques aux modules 6 évoqués plus haut;

Le raccordement d'une unité émettrice-réceptrice, en l'occurrence l'unité A, au lien 4 et au bus 9 qui la desservent, est présenté de manière détaillée en figure 3.

L'unité A est reliée à son équipement d'accés individuel A1 par quatre liaisons conductrices distinctes 13, 14, 15 et 17.

L'unité A émet sur la liaison 13, dite d'émission, les données numériques qu'elle veut transmettre à au moins une autre unité émettrice-réceptrice, soit via le bus 9, si l'unité destinataire est dans le même groupement de l'ensemble fonctionnel qui la comporte, soit via le lien 4, si cette unité destinataire dans un groupement distant du même ensemble fonctionnel ou dans un autre ensemble fonctionnel. Le groupement comportant l'unité A est par exemple un groupement central d'unités émettrices-réceptrices d'un commutateur téléphonique privé. Le groupement distant évoqué ci-dessus est par exemple constitué d'au moins une unité émettrice-réceptrice logée séparément du groupement central du commutateur téléphonique, l'autre ensemble fonctionnel étant par exemple un autre commutateur privé logé avec ou à proximité du groupement central précédemment considéré.

L'unité A présentée en figure 3 reçoit par la liaison 14, dite de réception, les données numériques émises vers elle par les autres unités du dispositif d'intercommunication entre unités émettrices-réceptrices telle que défini ci-dessus.

L'unité A est agencée pour fournir une tension continue, sur la liaison 15, dite de signalisation d'émission, lorsqu'elle transmet des données par la liaison 13 ,cette tension est appliquée à une résistance de charge 16 de l'équipement d'accès individuel A1 associé.

L'unité A est susceptible de recevoir les signaux d'une horloge H, via la liaison 17, en cas de détection de collision, ces signaux d'horloge dont la fréquence est par exemple de huit mégahertz, sont transmis par l'intermédiaire d'une porte 18 de l'équipement d'accès individuel A1. Cette dernière est commandée par une logique de détection de collision 20, via un fil ou conducteur de commande 19 dans l'équipement d'accès individuel A1 individuellement affecté à l'unité A.

Le bus 9 sur lequel sont raccordées toutes les unités émettrices-réceptrices du groupement, ou éventuellement de l'ensemble, dont fait partie l'unité A comporte quatre fils référencés 21, 22, 25 et 26.

Les deux fils 21, 22 forment une liaison de transmission de données en mode différentiel d'impédance contrôlée qui est équipée d'une résistance d'adaptation 23 ou 24 à chaque extrémité.

Le fil 25, dit de signalisation de collision, est relié à l'entrée de chacune des logiques de détection de collision respectives des équipements d'accès individuels des unités que dessert le bus 9 et notamment à la logique de détection 20 de l'équipement A1, par un conducteur 26.

Ce fil de signalisation de collision 25 sert essentiellement à propager vers toutes les unités émettrices-réceptrices raccordées au bus 9, un signal indicateur, ici de type tension continue, qui est produit par chaque unité du groupement lorsqu'elle veut émettre, ou émet, des données sur la boucle formée par les fils 21, 22.

Le fil 27, dit d'autorisation de réception, est propre au groupement des unités émettrices-réceptrices raccordées au bus 9, il sert à autoriser la réception, par ces unités, des données provenant d'une unité émettrice-réceptrice, non représentée, qui est reliée au lien 4, mais qui n'est pas elle-même raccordée au bus 9. Ceci se produit notamment si l'unité émettrice considérée est une unité séparément logée de l'ensemble fonctionnel comportant le groupement réunissant les unités directement raccordées au bus 9, ou si elle est une unité d'un autre ensemble fonctionnel ayant accès au lien 4.

Lorsqu'une unité telle l'unité A désire émettre des données, elle applique une tension continue de valeur prévue aux bornes de la résistance 16 de l'équipement d'accès individuel qui la dessert, soit ici A1, via la liaison 15 la reliant à cet équipement, comme indiqué plus haut. Dans l'équipement d'accès individuel A1, cette tension continue est appliquée, via un conducteur 28, sur une entrée de commande d'une porte 29, dite d'émission, d'un composant émetteur-récepteur différentiel-logique 30, d'un premier type classique.

Cette tension continue est aussi appliquée, via un inverseur logique 31, sur la base d'un transistor PNP 32 polarisé par deux résistances 33 et 34 et monté en émetteur commun.

En conséquence, ce transistor 32 se sature et applique, via un pont diviseur qui constitue sa charge de collecteur, une tension continue, par exemple 1,5 volts, sur le conducteur 26 de l'équipement d'accès individuel A1. Le pont diviseur se compose d'une résistance 73 propre à l'équipement d'accès individuel A1 et d'une résistance 74 qui est commune au groupement formé par les unités directement raccordées au bus 9, cette résistance 74 étant branchée entre le fil de signalisation de collision 25 et une masse commune.

En même temps, la porte d'émission 29 de l'équipement d'accès individuel A1, est commandée passante par l'application de la tension continue fournie par l'unité A émettrice, sur le conducteur 28, via la liaison 15. Les données numériques émises sur la sortie 13 par l'unité A sont alors transmises en mode différentiel par le composant émetteur-récepteur 30 de l'équipement d'accès individuel A1 aux deux fils 21 et 22 du bus 9, par l'intermédiaire d'une liaison d'échange de données en mode différentiel à deux fils ou conducteurs 35, 36.

Une porte 37, dite de réception, du composant émetteur-récepteur 30 est connectée par sa sortie à la liaison de réception 14 de l'unité A. Cette porte 37 est susceptible d'être commandée via un conducteur 38 qui est connecté, d'une part par un conducteur intermédiaire 39, au fil d'autorisation de réception 27 du bus 9 et à une sortie 40 de l'agencement d'accès commun 10 reliant le bus 9 au lien 4 et, d'autre part, à un conducteur de sortie 41 d'une logique 42 de l'équipement d'accès individuel A1. Cette logique 42 applique un zéro logique sur le conducteur 41 lorsqu'elle reçoit une tension continue de commande, par exemple de 1,5 volts, du conducteur 26, via le conducteur 43.

Afin de faciliter la compréhension, il sera expliqué à ce stade comment s'effectue le dialogue entre les unités A, B, C d'un seul et même groupement 8 considéré isolément.

Supposons par exemple que ce soit l'unité A qui veuille émettre des données, tandis que les unités B et C se bornent à accepter de recevoir les données émises par l'unité A.

Une tension continue de, par exemple, 1,5 volts est alors appliquée sur le fil 25 par l'unité A, via notamment la liaison 15, le transistor 32 et le conducteur 26 de l'équipement d'accès individuel A1; ceci entraîne la mise à l'état passant de la porte d'émission 29 de cet équipement.

Cette tension continue est alors transmise, via le fil 25, aux conducteurs des unités B et C qui correspondent au conducteur 26, ceci entraîne la mise à l'état passant des portes de réception 37 des équipements d'accès individuel A2, A3, chacune par la logique, correspondant à la logique 42, de celui des équipements qui la comporte.

L'unité A peut donc émettre ses données sur la liaison formée par les fils 21 et 22 du bus 9, via la liaison d'échange de données formée par les conducteurs 35 et 36; les unités B et C reçoivent ces données par l'intermédiaire de leurs liaisons correspondantes et respectives d'échange de données.

L'unité A reçoit aussi ses propres données, via la porte de réception 37 de son équipement d'accès individuel A1, car celle-ci est commandée passante de la même manière que les autres. Elle sait cependant que ce sont les données qu'elle a elle-même émises, puisqu'elle ne reçoit alors aucun signal de collision.

Supposons maintenant qu'après avoir séparément vérifié qu'aucune unité n'émettait sur la liaison commune formée par les fils 21, 22 du bus 9, deux unités, telles A et B, cherchent à émettre sur cette liaison commune et que ces recherches se produisent fortuitement de manière simultanée.

Ces unités A et B saturent alors ensemble leurs transistors 32 respectifs et comme la résistance 74 leur est commune, c'est cette fois-ci une tension une tension plus élevée, par exemple de 2,36 volts et non plus de 1,5 volts, qui est appliquée sur le conducteur 26 de chacune des unités du groupement desservi par le bus 9.

La logique de détection de collision 20 de chaque équipement d'accès individuel du groupement, qui est par exemple de type comparateur, reçoit un signal indicateur en tension qui entraîne la mise à l'état passant de la porte 18 de cet équipement d'accès individuel. L'horloge H est alors appliquée sur la liaison 17 de chacune des unités du groupement, elle constitue ici l'information de collision.

Cette information est prise en compte par les unités A et B qui la traitent de la manière classique, non rappelée ici, elle est aussi reçue par l'unité C qui ne la prend pas en compte, puisqu'elle n'est pas en train de tenter d'émettre.

Le fonctionnement de l'agencement d'accès commun 10 qui est prévu associé au groupement d'unités desservies par le bus 9 sera décrit en liaison avec les éléments évoqués ci-dessus auxquels il est maintenant supposé relié.

Comme déjà indiqué, un tel agencement d'accès commun 10 comporte un module émetteur-récepteur 11, qui est branché sur le lien commun 4 et un équipement auxiliaire 12.

Le module émetteur-récepteur 11 est prévu relié par trois couples de bornes pour liaisons différentielles à l'équipement auxiliaire 12 de l'agencement d'accès commun 10 qui le comporte.

Un premier couple de bornes Tx+, Tx- reçoit les données provenant de la liaison formée par les fils 21 et 22 du bus 9, via l'équipement auxiliaire 12, afin de transmettre ces données sur le lien 4 par l'intermédiaire de circuits concernés du module émetteur-récepteur.

Un second couple de bornes Rx+, Rx- permet la transmission des données reçues du lien 4 par le module émetteur-récepteur, à destination des unités A, B, C du groupement 8, cette transmission s'effectuant via l'équipement auxiliaire 12, commun à ces unités et via les équipements d'accès individuels respectifs A1, A2, A3 de ces unités.

Un troisième couple de bornes C+, C- transmet un signal de collision, lorsque le module émetteur-récepteur détecte une collision occasionnée par des tentatives d'émission simultanées par des unités sur le lien 4.

Trois transformateurs d'isolement globalement référencés 44 relient classiquement l'équipement auxiliaire 12, associé au bus 9, aux trois couples de bornes du module émetteur-récepteur 11 également associé à ce bus 9.

Il est initialement supposé que, comme précédemment, l'unité A désire émettre des données et qu'elle est la seule unité à vouloir le faire au niveau du groupement 8.

Comme précédemment, dans un tel cas, une tension continue est créée à l'initiative de l'unité A sur le conducteur 26 la desservant, ce qui rend passantes les portes de réception 37 de toutes les unités du groupement 8.

Le conducteur 26 est aussi relié, par un conducteur 45 à une logique 46 de l'équipement auxiliaire 12 commun aux unités desservies par le bus 9. Une sortie de cette logique 46 est reliée par un conducteur 47 et via un inverseur logique 48 à une entrée de commande d'une première porte 50 d'un composant émetteur-récepteur 51, dit de ré-émission, dans l'équipement auxiliaire 12, ce composant étant identique au composant 30 des équipements d'accès individuel tels que A1.

En conséquence, la tension créée à l'initiative de l'unité A sur le conducteur 26, lorsqu'elle veut émettre, commande aussi la mise à l'état passant de la porte 50 de l'équipement auxiliaire 12 associé. Ceci conduit à ce que les données émises par l'unité A soient transmises aux entrées différentielles de cette porte par la liaison d'échange en mode différentiel à deux conducteurs 35, 36 et par une liaison en mode différentiel constituée par deux conducteurs 52, 53 connectés aux conducteurs 35, 36 et en conséquence aux fils 21, 22 du bus 9.

La porte 50 de l'équipement auxiliaire 12 considéré fournit ici un signal de type logique binaire classique à partir des signaux de données qu'elle reçoit sous forme différentielle, ce signal classique est restitué sous forme différentielle par une porte d'un composant émetteur-récepteur 55 lui aussi identique au composant 30. Les signaux différentiels ainsi obtenus sont appliqués aux bornes Tx+, Tx- du module émetteur-récepteur 11, associé à l'équipement auxiliaire 12 dans le même agencement 10, via un des transformateurs 44 de cet agencement, ils sont en conséquence transmis au lien par ce module.

Les données qui circulent sur le lien 4 sont transformées par le module émetteur-récepteur 11 de chaque agencement d'accès commun 10 en signaux différentiels qui sont appliqués aux bornes Rx+ et Rx- de ce module. Ces signaux sont appliqués, via un des transformateurs 44, à une logique 58 à deux sorties de l'équipement auxiliaire 12 de l'agencement où ils sont produits. Une première des sorties de logique 58, ici prévue inversée, est reliée par un conducteur 59 à une entrée d'une porte 63, de type NOR, de l'équipement 12 de l'agencement considéré, elle fournit un signal de valeur logique zéro lorsque des données sont reçues en provenance du lien 4. La seconde des sorties de la logique 58, qui est ici la sortie directe, est reliée par un conducteur 60 à l'entrée d'une seconde porte 61 du composant émetteur-récepteur 51 de ré-émission de l'équipement. Elle transmet donc à cette porte 61, via le conducteur 60, les données provenant du lien 4 qu'elle reçoit sous forme binaire. Lors des émissions de données par une unité telle que A, la porte 61 de l'équipement auxiliaire 12 associé est commandée bloquante par la porte 63 du même équipement pour éviter la ré-émission sous forme différentielle des données que cette unité vient d'émettre sur le lien 4, via les conducteurs 35 et 36 qui la desservent. A cet effet, la porte 63 de l'équipement auxiliaire associé au groupement comportant l'unité considérée a une seconde entrée connectée au conducteur de sortie 47 de la logique 46 de cet équipement et cette seconde entrée est ici supposée portée au niveau logique un, lorsque l'unité est en phase d'émission et marque en conséquence le conducteur 26 correspondant.

Il est supposé maintenant que les données sont destinées à être émises par une unité D, non représentée en figure 3, qui est desservie par le lien 4, mais qui n'est pas directement raccordée au bus 9, contrairement aux unités A, B ou C de la figure 1.

Comme indiqué plus haut, les données transmises par le lien 4 à partir de l'unité D agissent sur la logique 58 du ou des équipements auxiliaires de groupement(s) et en conséquence sur la porte 63 de chaque équipement auxiliaire 12 les recevant.

Supposant ici qu'aucune des unités directement raccordées au bus 9 n'est supposée émettrice à ce moment, il y a donc un niveau logique zéro sur le conducteur 26 de chacune de ces unités et sur le fil 25 du bus 9. La logique 46 de l'équipement auxiliaire 12 commun produit alors un signal de valeur logique zéro qui est appliqué à une des deux entrées de la porte 63 de cet équipement commun, en même temps que le signal de valeur logique zéro issu de la logique 58 appartenant aussi à cet équipement.

Le signal de valeur logique un produit par la porte 63 ainsi commandée rend alors passante la porte 61 du composant émetteur-récepteur 51 de l'équipement déjà considéré. Les données véhiculées par le lien 4 sont alors susceptibles d'être transmises par cette porte 61 rendue passante.

Le signal de valeur logique un produit par la porte 63 commandée comme indiqué ci-dessus est aussi appliqué à l'entrée d'un inverseur 66, associé, dont la sortie est reliée au fil 27 du bus 9, via un conducteur 40 et un conducteur intermédiaire 39, ce qui fixe ce fil 27 et ce conducteur 39 à un niveau logique zéro, dans le cas considéré ci-dessus. Les portes de réception 37 des équipements d'accès individuel, raccordés à l'équipement auxiliaire 12 considéré, dont l'entrée de commande est reliée à un conducteur intermédiaire 39 porté à un niveau logique zéro sont alors commandées passantes et permettent la transmission des données provenant du lien 4 aux unités qu'elles desservent, telle par la porte 37 de l'équipement d'accès individuel A1 à l'unité A.

Par contre la porte 50 associée à une porte 37 pour la desserte d'une même unité est maintenue bloquée dans le cas considéré ci-dessus de manière à éviter une retransmission intempestive des données reçues du lien 4 vers lui-même. A cet effet, le signal de niveau logique zéro présent en sortie de la logique 46 en cette occasion est inversé avant d'être appliqué à l'entrée de commande de la porte 50 qui est donc commandée non passante.

Si deux unités, telles A et D, tentent simultanément d'émettre sur le lien 4, elles produisent un brouillage qui est détecté par les deux modules émetteurs-récepteurs, tel 11 pour l'unité A, qui les desservent respectivement.

Un signal de collision est alors produit comme prévu en la matière et il apparaît aux bornes C+, C- de chacun de ces deux modules émetteurs-récepteurs. Le signal de collision produit par un module émetteur-récepteur est appliqué à une logique 67 de l'équipement auxiliaire 12 associé, via un transformateur 44, et il entraîne ici la production d'un signal de valeur un en sortie de cette logique, ce signal est lui-même inversé par un inverseur 69 avant d'être appliqué sur la base d'un transistor 72, de type PNP, via une résistance 70 dans l'équipement auxiliaire. L'émetteur de ce transistor 72 est relié par une résistance 75 au fil 25 du bus 9, via un conducteur 26, de la même manière que le transistor 32 de l'équipement d'accès individuel A1 représenté. Le transistor 72 est donc saturé et comme l'unité tente d'émettre le transistor 32 de l'équipement d'accès individuel A1 est également saturé. La tension continue présente sur le fil 26 est donc de 2,36 volts dans l'exemple choisi, ce qui entraîne l'application à la logique 20 du signal indicateur de collision que constitue cette tension dans la réalisation envisagée. La porte 18 de l'équipement d'accès individuel A1 est alors commandée par la logique 20 et déclenche l'envoi à l'unité A de l'information de collision que constitue le signal d'horloge H. La tension continue présent sur le conducteur 26 est appliquée à une entrée du circuit logique 20 de chacun des équipements d'accès individuel du groupement comportant les unités directement raccordées au bus 9, il n'est pas pris en compte par les unités autres que l'unité alors émettrice A, tant que ces autres unités ne tentent pas d'émettre.

Comme il va de soi, l'invention n'est pas limitée à l'exemple de réalisation qui vient d'être décrit, et d'autres modes d'exécution sont envisageables sans sortir de son cadre.

## Revendications

1. Dispositif d'intercommunication pour unités émettrices-réceptrices de données numériques se partageant au moins une lien support de transmission commun (4) auquel elles accèdent par une méthode de type dit "CSMA/CD", caractérisé en ce qu'il comporte au moins un bus commun (9) à une pluralité d'unités (A, B, C) formant un groupement accédant au lien support de transmission commun (4) par l'intermédiaire d'un agencement d'accès (10) commun, ledit bus commun comportant deux fils (21, 22) formant une boucle de transmission de données numériques en mode différentiel auxquels les unités du groupement sont reliées en parallèle, via chacune un composant émetteur-récepteur individuel (30), bi-directionnel et commutable, pour leurs intercommunications, ledit bus commun comportant de plus un fil de signalisation de collision (25), auquel les unités du groupement et l'agencement d'accès commun (10) affecté à ce groupement sont reliés en commun , pour n'autoriser qu'une seule émission à la fois au niveau du groupement, soit par une unité du groupement, soit par l'agencement, et pour bloquer toutes tentatives d'émissions simultanées, ainsi qu'un fil dit d'autorisation de réception externe (27) qui est marqué par l'agencement d'accès commun (10) affecté au groupement, lorsque cet agencement est émetteur autorisé à destination de ce groupement, et qui est relié à une entrée de commande du composant émetteur-récepteur individuel de chaque unité du groupement pour autoriser la transmission à ces unités des données émises en ce cas par l'agencement d'accès.

2. Dispositif d'intercommunication, selon la revendication 1, en ce que l'agencement d'accès (10) commun à un groupement d'unités (A, B, C) interconnectées par un même bus commun (9) comporte au moins un composant émetteur-récepteur (51), bi-directionnel et commutable, connecté aux fils (21, 22) formant boucle du bus commun, avec les composants émetteurs-récepteurs individuels (30) des unités de ce groupement pour les transmissions de données du lien support de transmission commun (4) à destination d'au moins une unité du groupement ou inversement, sous la supervision dudit agencement d'accès commun et des équipements d'accès individuels propres aux unités du groupement considéré.

3. Dispositif d'intercommunication, selon la revendication 2, caractérisé en ce que l'agencement commun (10) affecté à un groupement d'unités (A, B, C) interconnectées par un même bus commun(9) et les équipements individuels (A1, A2, A3) des unités de ce groupement comportent identiquement des moyens (32,73 ou 67, 72, 75) pour permettre à chacun d'appliquer individuellement une même tension sur le fil de signalisation de collision (25) auquel ces équipements individuels d'accès et cet agencement d'accès sont reliés en commun, lorsqu'il est émetteur de données, soit du lien support de transmission commun (4) vers les unités du groupement en ce qui concerne l'agencement d'accès commun, soit lorsque l'unité à laquelle il est affecté est émettrice en ce qui concerne un équipement d'accès individuel du groupement.

4. Dispositif d'intercommunication, selon la revendication 3, caractérisé en ce que l'agencement d'accès commun (10) affecté à un groupement d'unités (A, B, C) interconnectées par un même bus commun (9) comporte des moyens (46) pour commander passant, vers le lien support de transmission commun (4), le composant émetteur-récepteur (51) qu'il comporte, en cas d'émission de données par une unité du groupement.

5. Dispositif d'intercommunication, selon la revendication 4, caractérisé en ce que l'agencement d'accès commun (10) affecté à un groupement d'unités (A, B, C) interconnectées par un même bus commun (9) comporte des moyens (58, 64) pour commander passant le composant émetteur-récepteur (51) qu'il comporte et les composants émetteurs-récepteurs individuels (30) des unités du groupement vers ces unités, en cas d'émission de données parvenant par le lien support de transmission commun (4).

## Claims

1. Intercommunication apparatus for two digital data transceiver units sharing at least one link supporting common transmission (4) to which they gain access by a method of the "CSMA/CD" type, the apparatus being characterized in that it comprises at least one bus (9) common to a plurality of units (A, B, C) forming a group having access via a common access facility (10) to the link that supports common transmission (4), said common bus comprising two wires (21, 22) forming a loop for transmitting digital data in differential mode, the units of the group being connected to said wires in parallel, each via an individual both-way and switchable transceiver component (30) for intercommunication purposes, said common bus further including a collision signaling wire (25) to which the units of the group and the common access facility (10) allocated to said group are connected in common so as to authorize only one transmission at a time from the group, either by a unit of the group or by the facility, and so as to block all attempts at simultaneous transmission, and also a wire (27) for authorizing external reception, which wire is marked by the common access facility (10) allocated to the group when said facility is an authorized sender to the group, and which is connected to a control input of the individual transceiver component of each unit of the group to authorize transmission to said units of data transmitted in this case by the access facility.

2. Intercommunication apparatus according to claim 1, characterized in that the access facility (10) common to a group of units (A, B, C) interconnected by the same common bus (9) has at least one both-way and switchable transceiver component (51) connected to the wires (21, 22) forming the loop of the common bus, together with the individual transceiver components (30) of the units of the group for transmitting data from the common transmission support link (4) to at least one unit of the group or vice versa under the supervision of said common access facility and of the individual access equipments specific to the units of the group under consideration.

3. Intercommunication apparatus according to claim 2, characterized in that the common facility allocated to a group of units (A, B, C) interconnected by the same common bus (9) and the individual equipments (A1, A2, A3) of the units of said group comprise identical means (32, 73 or 67, 72, 75) for enabling each of them, when acting as a data transmitter, to apply individually the same voltage on the collision signaling wire (25) to which the individual access equipments and the access facility are connected in common, transmission being either from the common transmission support link (4) towards the units of the group when it is the common access facility that is transmitting, or else from the unit to which the means is allocated when it is an individual access equipment of the group that is transmitting.

4. Intercommunication apparatus according to claim 3, characterized in that the common access facility (10) allocated to a group of units (A, B, C) interconnected by the same common bus (9) includes means (46) for causing the transceiver component (51) that it includes to be conducive towards the common transmission support link (4) when a unit of the group is sending data.

5. Intercommunication apparatus according to clam 4, characterized in that the common access facility (10) allocated to a group of units (A, B, C) interconnected by the same common bus (9) includes means (58, 64) for causing the transceiver component (5) that it includes and the individual transceiver components (30) of the units of the group to conduct towards said units when transmitting data that arrives via the common transmission support link (4).

## Patentansprüche

1. Wechselübertragungsvorrichtung für Sender-Empfänger-Einheiten von digitalen Daten, die sich wenigstens eine gemeinsame Übertragungs-Trägerverbindung (4) teilen, auf die sie nach einem sogenannten 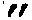 CSMA/CD"-Verfahren zugreifen, dadurch gekennzeichnet, daß sie wenigstens einen gemeinsamen Bus (9) für eine Mehrzahl von Einheiten (A, B, C) aufweist, die eine Gruppierung bilden, die auf die gemeinsame Übertragungs-Trägerverbindung (4) über eine gemeinsame Zugriffsanordnung (10) zugreift, wobei der Bus zwei Adern (21, 22) aufweist, die eine Übertragungsschleife für digitale Daten im differentiellen bzw. Gegentakt-Modus bilden, an welche die Einheiten der Gruppierung parallel, jeweils über einen individuellen, bidirektionalen und umschaltbaren Sender-Empfänger-Baustein (30) für ihre Wechselübertragungen angeschlossen sind,
wobei der gemeinsame Bus ferner eine Kollisionssignalisierungsader (25), an die die Einheiten der Gruppierung und die dieser Gruppierung zugeordnete gemeinsame Zugriffsanordnung (10) gemeinsam angeschlossen sind, um an der Gruppierung jeweils nur eine einzige Sendung gleichzeitig, pro Einheit der Gruppierung oder pro Anordnung, zuzulassen und alle gleichzeitigen Sendeversuche zu blockieren, sowie eine sogenannte externe Empfangserlaubnisader (27) aufweist, die von der der Gruppierung zugeordneten gemeinsamen Zugriffsanordnung markiert wird, wenn diese Anordnung ein zum Senden an diese Anordnung ermächtigter Sender ist, und die an einen Steuereingang des individuellen Sender-Empfänger-Bausteins jeder Einheit der Gruppierung angeschlossen ist, um die Übertragung von von der Zugriffsanordnung in diesem Fall gesendeten Daten an diese Einheiten zu erlauben.

2. Wechselübertragungsvorrichtung nach Anspruch 1, dadurch gekennzeichnet, daß die Zugriffsanordnung (10), die einer Gruppierung von miteinander durch einen gleichen, gemeinsamen Bus (9) verbundenen Einheiten (A, B, C) gemeinsam ist, wenigstens einen bidirektionalen und unschaltbaren Sender-Empfänger-Baustein (51) aufweist, der mit den individuellen Sender-Empfänger-Bausteinen (30) der Einheiten dieser Gruppierung an die die Schleife bildenden Adern (21, 22) des gemeinsamen Busses für die Übertragung von Daten von der gemeinsamen Übertragungs-Trägerverbindung (4) an wenigstens eine Einheit der Gruppierung oder umgekehrt unter der Überwachung der gemeinsamen Zugriffsanordnung und der zu den Einheiten der betrachteten Gruppierung gehörenden individuellen Zugriffseinrichtungen angeschlossen ist.

3. Wechselübertragungsvorrichtung nach Anspruch 2, dadurch gekennzeichnet, daß die gemeinsame Zugriffsanordnung (10), die einer Gruppierung von miteinander durch einen gleichen, gemeinsamen Bus (9) verbundenen Einheiten (A, B, C) zugeordnet ist, und die individuellen Einrichtungen (A1, A2, A3) der Einheiten dieser Gruppierung in identischer Weise Mittel (32, 73 oder 67, 72, 75) aufweisen, um es jeder zu ermöglichen, individuell eine gleiche Spannung auf die Kollisionssignalisierungsader (25) zu legen, an die diese individuellen Zugriffseinrichtungen und die Zugriffsanordnung gemeinsam angeschlossen sind, wenn sie Sender von Daten ist, sei es von der gemeinsamen Übertragungsträger-Verbindung (4) zu den Einheiten der Gruppierung, was die gemeinsame Zugriffsanordnung angeht, oder sei es wenn die Einheit, der sie zugeordnet ist, Sender ist, was eine individuelle Zugriffseinrichtung der Gruppierung angeht.

4. Wechselübertragungsvorrichtung nach Anspruch 3, dadurch gekennzeichnet, daß die einer Gruppierung von miteinander durch einen gleichen gemeinsamen Bus (9) verbundenen Einheiten (A, B, C) zugeordnete gemeinsame Zugriffsanordnung (10) Mittel (46) umfaßt, um im Fall des Sendens von Daten durch eine Einheit der Gruppierung den Sender-Empfänger-Baustein (51), den sie umfaßt, zur gemeinsamen Übertragungsträger-Verbindung (4) hin durchlässig zu steuern.

5. Wechselübertragungsvorrichtung nach Anspruch 4, dadurch gekennzeichnet, daß die einer Gruppierung von miteinander durch einen gleichen gemeinsamen Bus (9) verbundenen Einheiten (A, B, C) zugeordnete gemeinsame Zugriffsanordnung (10) Mittel (58, 64) umfaßt, um im Fall des Sendens von über die gemeinsame Übertragungsträger-Verbindung (4) eintreffenden Daten den Sender-Empfänger-Baustein (51), den sie umfaßt, und die individuellen Sender-Empfänger-Bausteine (30) der Einheiten der Gruppierung zu diesen Einheiten hin durchlässig zu steuern.
